# DEMANDE DE BREVET EUROPEEN

(11) **EP 2 996 444 A1**
(43) Date de publication de la demande: **16.03.2016**
(21) Numéro de dépôt: 15184562.5
(22) Date de dépôt: 09.09.2015
(51) Int. Cl.: H05B 37/02

(54) **MODULE DE RÉGLAGE DE L'INTENSITÉ LUMINEUSE D'UNE SOURCE LUMINEUSE D'UN LAMPADAIRE, ET LAMPADAIRE**

(30) Priorité: 09.09.2014 FR 1458456
(71) Demandeur: Société Industrielle et Commerciale pour l'Équipement des Collectivités, 52130 Wassy (FR)
(72) Inventeur: CARRU, Vincent, 10240 Nogent sur Aube (FR)
(74) Mandataire: Regimbeau

(57) **Abrégé**

L'invention concerne un module (5) de réglage de l'intensité lumineuse d'une source (2) lumineuse d'un lampadaire (1), ledit module (5) comprenant une interface (7) de réglage manuel, l'interface (7) de réglage manuel permettant le réglage manuel par un opérateur :
d'au moins une intensité d'alimentation maximale (Iₘₐₓ), ou d'une grandeur corrélée,
d'au moins une intensité d'alimentation minimale (Iₘᵢₙ), ou d'une grandeur corrélée, et
d'au moins un programme (P) temporel comprenant au moins une période temporelle durant laquelle la source (2) lumineuse reçoit l'intensité d'alimentation minimale (Iₘᵢₙ), et au moins une autre période temporelle durant laquelle la source (2) lumineuse reçoit l'intensité d'alimentation maximale (Iₘₐₓ),
le module (5) de réglage étant configuré pour contrôler la source (2) lumineuse pour que celle-ci reçoive une intensité d'alimentation conforme au programme (P) temporel sélectionné.

L'invention concerne également un lampadaire comprenant ce module.

## Description

### DOMAINE DE L'INVENTION

L'invention concerne un module de réglage de l'intensité lumineuse d'une source lumineuse d'un lampadaire pour éclairage extérieur, comme par exemple un lampadaire destiné à l'éclairage urbain. L'invention concerne également un tel lampadaire.

### ARRIERE-PLAN TECHNOLOGIQUE

Les lampadaires pour éclairage extérieur sont notamment utilisés afin d'assurer un éclairage pendant les plages nocturnes où la luminosité est faible, voire inexistante.

Les lampadaires comprennent en général une source lumineuse (également appelée luminaire) montée sur un mât, l'intensité de la source lumineuse étant gérée par une alimentation de type électrique, connectée au réseau électrique général.

Afin de gérer l'intensité de la source lumineuse du lampadaire, une solution consiste à pré-programmer en usine une carte électronique de l'alimentation de la source lumineuse.

En particulier, à proximité et autour du milieu de la nuit, la fréquentation du milieu urbain diminue considérablement, ce qui rend inutile l'utilisation d'une intensité lumineuse trop élevée.

Toutefois, la modification de la programmation de la carte nécessite un retour en usine, ce qui est long et coûteux, ou des opérations sur site qui sont complexes et nécessitent des opérateurs qualifiés, ainsi que du matériel perfectionné.

De plus, des normes de sécurité imposent que les lampadaires soient protégés contre certaines surtensions, dues par exemple à des coups de foudre ou à des défauts de câblage.

Les solutions actuelles permettant de lutter contre ces phénomènes entraînent un accroissement de la complexité de la fabrication du luminaire.

L'invention propose un module de réglage de l'intensité lumineuse d'une source lumineuse d'un lampadaire, ledit module comprenant une interface de réglage manuel, l'interface de réglage manuel permettant le réglage manuel par un opérateur d'au moins une intensité d'alimentation maximale, ou d'une grandeur corrélée, d'au moins une intensité d'alimentation minimale, ou d'une grandeur corrélée, et d'au moins un programme temporel comprenant au moins une période temporelle durant laquelle la source lumineuse reçoit l'intensité d'alimentation minimale, et au moins une autre période temporelle durant laquelle la source lumineuse reçoit l'intensité d'alimentation maximale, le module de réglage étant configuré pour contrôler la source lumineuse pour que celle-ci reçoive une intensité d'alimentation conforme au programme temporel sélectionné.

L'invention est avantageusement complétée par les caractéristiques suivantes, prises seules ou en une quelconque de leur combinaison techniquement possible :
- l'interface manuelle permet en outre la sélection d'une intensité d'alimentation, ou d'une grandeur corrélée, et d'un programme temporel pour lequel la source lumineuse reçoit constamment ladite intensité d'alimentation ;
- le module de réglage comprend un premier bouton de réglage manuel de l'intensité d'alimentation minimale, un deuxième bouton de réglage manuel de l'intensité d'alimentation maximale, et un troisième bouton de sélection manuelle du programme temporel ;
- le module de réglage est configuré pour détecter un point temporel de référence à partir de son temps d'allumage, au moins un programme temporel étant défini par rapport à ce point temporel de référence ;
- la source lumineuse comprend une alimentation gérant son alimentation électrique, le module de réglage communiquant avec l'alimentation par un signal numérique de sorte à la contrôler conformément à la sélection opérée sur l'interface de réglage manuel ;
- le module de réglage comprend en outre un dispositif de protection contre la surtension, configuré pour protéger la source lumineuse d'une surtension ;
- le module de réglage comprend un témoin lumineux indiquant lorsque le dispositif de protection est actuellement actif contre une surtension ;
- le dispositif de protection contre la surtension est disposé entre une ligne électrique de phase et une ligne électrique de neutre provenant d'un réseau électrique et alimentant la source lumineuse ;
- le dispositif de protection contre la surtension est coulé dans une résine de protection.

L'invention concerne également un ensemble comprenant la source lumineuse et le module de réglage tel que décrit.

L'invention concerne également un lampadaire comprenant une source lumineuse, un mât supportant la source lumineuse, caractérisé en qu'il comprend en outre un module de réglage de l'intensité lumineuse de la source lumineuse tel que décrit, et disposé dans le mât.

L'invention offre de nombreux avantages et permet de piloter un la source lumineuse du lampadaire en pied de mât de manière simple et personnalisée. En particulier, l'invention permet de régler les plages d'abaissement nocturne par simple réglage manuel et visuel par un opérateur, sans nécessiter l'utilisation d'une unité de pilotage externe et la connexion de ladite unité à la source lumineuse.

Grâce à l'interface simple et manuelle du module, un opérateur non spécialisé peut lui-même piloter la source lumineuse via ladite interface de réglage du module.

De plus, étant donné que le module communique par signal numérique avec la source lumineuse et son alimentation, celui-ci s'adapte à tout type de source lumineuse. Il n'est pas nécessaire de modifier la source lumineuse ou son alimentation pour pouvoir le piloter.

On note également que le module est peu encombrant (mêmes dimensions environ qu'un porte-fusible).

Enfin, le module de réglage peut notamment assurer à la fois le réglage manuel de l'intensité lumineuse ainsi que la protection du lampadaire contre les surtensions, dans un boîtier unique, ce qui simplifie la fabrication du lampadaire et de sa source lumineuse, et permet une mutualisation des fonctions.

### DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
- la Figure 1 est une représentation schématique d'un lampadaire comprenant un module de réglage selon l'invention ;
- la Figure 2 est une représentation schématique d'un mode de réalisation d'un module de réglage de l'intensité lumineuse selon l'invention ;
- la Figure 3 est une représentation temporelle d'un programme temporel comprenant une période temporelle où l'intensité d'alimentation est égale à Iₘᵢₙ et une période temporelle où l'intensité d'alimentation est égale à Iₘₐₓ ;
- la Figure 4 est une représentation du module de réglage comprenant en outre un dispositif de protection contre la surtension ;
- la Figure 5 est une représentation d'un exemple de réalisation d'un dispositif de protection contre la surtension ;
- les Figures 6 et 7 sont une représentation d'un autre exemple de réalisation d'un dispositif de protection contre la surtension.

### DESCRIPTION DETAILLEE

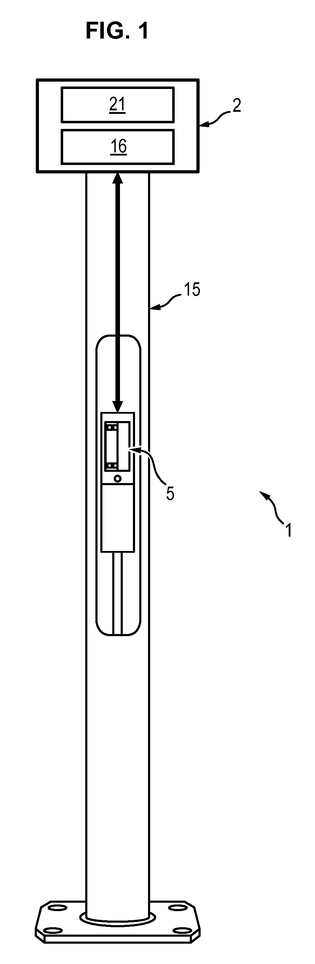

On a représenté en Figure 1 un mode de réalisation d'un lampadaire 1 pour éclairage extérieur.

Le lampadaire 1 comprend typiquement un mât 15 (également appelé poteau), qui supporte une source 2 lumineuse (également appelée luminaire par l'homme du métier). La source 2 lumineuse comprend des éléments 21 d'éclairage, comme des diodes électroluminescentes ou des ampoules classiques.

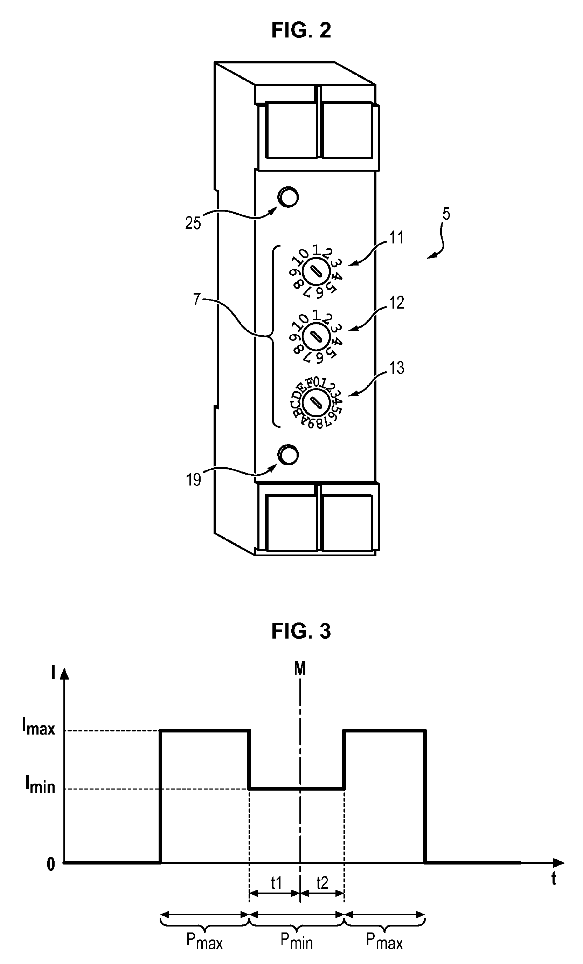

Le lampadaire 1 comprend en particulier un module 5 de réglage de l'intensité lumineuse, illustré également en Figure 2. Le module 5 de réglage comprend de manière classique une mémoire et une unité de traitement permettant de mettre en oeuvre les opérations décrites ci-après.

Le module 5 de réglage comprend une interface 7 de réglage manuel permettant le réglage manuel par un opérateur de différents paramètres.

En particulier, l'interface 7 de réglage manuel permet le réglage manuel par un opérateur d'une intensité d'alimentation maximale Iₘₐₓ et d'une intensité d'alimentation minimale Iₘᵢₙ. On entend par intensité « maximale » Iₘₐₓ et intensité « minimale » Iₘᵢₙ des valeurs à tendance hautes et des valeurs à tendance basses du cycle de l'intensité, avec Iₘᵢₙ inférieure à Iₘₐₓ.

On note que l'intensité peut être définie en tant qu'intensité électrique fournie à la source 2 lumineuse (c'est-à-dire une intensité en Ampères, ou son équivalent en tension en Volts), ou par une grandeur qui lui est corrélée, comme le flux lumineux émis par la source 2 lumineuse (unité : lumens).

En effet, connaissant la puissance et le nombre des éléments 21 d'éclairage de la source 2 lumineuse, le module 5 est configuré pour convertir le flux lumineux recherché pour la source 2 en une intensité d'alimentation à fournir à la source.

Dans la suite, on évoque les intensités d'alimentation fournies à la source 2, mais il est entendu qu'une grandeur corrélée peut être utilisée, comme le flux lumineux émis par la source 2.

Dans un mode de réalisation, l'interface 7 de réglage manuel permet de régler une pluralité de valeurs d'intensités d'alimentation (Iₘᵢₙ₁, Iₘᵢₙ₂, ...Iₘₐₓ₁, Iₘₐₓ₂).

La définition des intensités Iₘᵢₙ et Iₘₐₓ peut consister en la sélection manuelle par un opérateur de valeurs, par exemple par lecture visuelle sur l'interface 7, ou par l'entrée directe de valeurs via des moyens de saisie manuelle et d'affichage.

En outre, l'interface 7 de réglage manuel permet le choix d'au moins un programme P temporel comprenant au moins une période durant laquelle la source 2 lumineuse reçoit l'intensité d'alimentation minimale I_{min,} et au moins une autre période temporelle durant laquelle la source 2 lumineuse reçoit l'intensité d'alimentation maximale Iₘₐₓ.

Le choix du programme P temporel peut consister en la sélection d'un programme préenregistré dans une mémoire du module 5 via la sélection manuelle d'une référence correspondante (nombre, chiffre, etc.) ou par la définition directe des paramètres du programme par l'opérateur via l'interface 7 manuelle.

Dans le cas où une pluralité d'intensité d'alimentation I_{min,} Iₘᵢₙ₂,...Iₘₐₓ₁, Iₘₐₓ₂ ont été définies, l'interface 7 de réglage manuel permet le choix d'un programme P temporel comprenant une période temporelle pour chaque intensité d'alimentation sélectionnée, de sorte à ce que l'intensité reçue par la source 2 lumineuse soit égale à chaque intensité sélectionnée durant la période temporelle correspondante.

Dans un mode de réalisation, le réglage de l'intensité minimale et maximale, et du programme temporel se fait par simple lecture de données affichées sur l'interface 7 et réglage manuel par l'opérateur.

L'interface 7 manuelle comprend typiquement des indications visuelles (montant ou pourcentage des intensités, référence et/ou paramètres du programme temporel, etc.) permettant à un opérateur d'identifier la sélection à opérer par simple lecture.

Dans un mode de réalisation, la période temporelle pour laquelle l'intensité d'alimentation est égale à Iₘᵢₙ corresponde à une plage de la nuit, et l'autre plage temporelle pour laquelle l'intensité d'alimentation est égale à Iₘₐₓ correspond également à une plage nocturne, par exemple en début et en fin de nuit.

En effet, le lampadaire est en général actif dans des plages nocturnes, tandis que l'abaissement de l'intensité lumineuse du lampadaire présente notamment un intérêt dans des périodes temporelles de moindre fréquentation, qui correspondent à des plages particulières desdites plages nocturnes.

Toutefois, dans d'autres modes de réalisation, les périodes temporelles des intensités Iₘᵢₙ et Iₘₐₓ, telles que réglées par le module 5 de réglage, peuvent également inclure des périodes diurnes, ou correspondre à des périodes diurnes.

Par exemple, dans un mode de réalisation, les périodes temporelles des intensités Iₘᵢₙ et Iₘₐₓ sont utilisés pour des opérations particulières de maintenance, qui nécessitent une telle variation d'éclairage, y compris de jour.

Dans un autre mode de réalisation, les périodes temporelles des intensités Iₘᵢₙ et Iₘₐₓ, telles que réglées par le module 5 de réglage, sont utilisés lors d'opérations de requalification de la chaussée.

En effet, les niveaux d'éclairements des chaussées dépendent de la catégorie de chaussée considérée, qui dépend elle-même de divers paramètres (état du trafic, présence possible de piétons et/ou de cyclistes, nombres d'intersection, etc.).

La variation des niveaux d'éclairements, contrôlée par le module 5 de réglage, peut être utilisée lors d'un changement ponctuel de l'utilisation de la chaussée (par exemple lors de la présence de travaux), ou lors d'un changement permanent.

Une autre application du contrôle manuel de l'éclairage par le module 5 de réglage est le déplacement d'un lampadaire d'une zone à une autre, qui peut nécessiter une modification du programme temporel d'éclairement.

Le module 5 de réglage communique avec la source 2 lumineuse et la contrôle afin que celle-ci reçoive une intensité conforme au programme P temporel sélectionné.

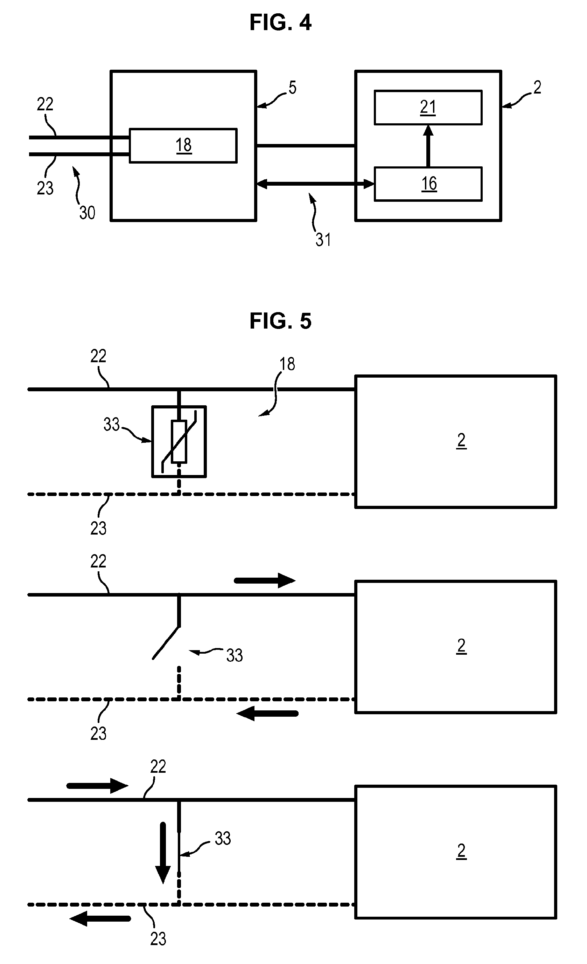

En particulier, la source 2 lumineuse comprend en général une alimentation 16 gérant son alimentation électrique, le module 5 de réglage communiquant avec l'alimentation 16 par un signal numérique 31 (cf. Figure 4) de sorte à la contrôler conformément à la sélection opérée sur l'interface 7 de réglage manuel.

Le codage du signal numérique se fait typiquement selon la norme DALI (acronyme de « *Digital Addressable Lighting Interface* »)*.* Alternativement, le module 5 communique avec la source 2 lumineuse, et en particulier avec son alimentation 16, par un signal de type radio, par exemple Wi-Fi ou Bluetooth.

Le module 5 de réglage permet donc un réglage aisé et direct de l'intensité lumineuse par un opérateur. En particulier, il n'est pas nécessaire de connecter une unité de traitement supplémentaire, comme un ordinateur, au lampadaire, ni de disposer d'un opérateur ayant des compétences techniques poussées.

Avantageusement, le module 5 de réglage est disposé dans le mât 15, ce qui permet un accès direct par l'opérateur. En particulier, le module 5 de réglage peut être disposé en pied de mât, c'est-à-dire à une hauteur accessible par un opérateur humain (inférieure à environ 1 ou 2 mètres). En général, le module 5 est disposé dans un coffret de raccordement du mât 15 présentant une porte d'accès, afin de bloquer son accès aux personnes non autorisées. La fixation du module 5 de réglage peut s'effectuer par clipsage, ou par vissage du module 5 sur un rail du coffret de raccordement du mât 15.

Le positionnement en pied de mât est rendu possible par le fait que le module 5 de réglage communique par un signal numérique avec la source 2 lumineuse, ce qui permet de déporter ledit module 5 de réglage en pied de mât, sans craindre de perdre ou d'altérer le signal de communication.

Dans un mode de réalisation, l'interface 7 de réglage manuel permet en outre la sélection d'une intensité d'alimentation I₀ (ou d'une grandeur lui étant corrélée) et d'un programme P₀ temporel pour lequel l'intensité d'alimentation reçue par la source 2 lumineuse est constamment égale à ladite intensité I₀. Comme mentionné précédemment, la sélection de I₀ et P₀ peut être effectuée par sélection de valeurs affichées sur le module 5 ou par entrée directe via des moyens de saisie et d'affichage de l'interface 7.

Un exemple de réalisation du module 5 de réglage est illustré en Figure 2. Cet exemple de réalisation n'est toutefois pas limitatif.

Le module 5 de réglage comprend un premier bouton 11 de réglage manuel de l'intensité d'alimentation minimale Iₘᵢₙ. Le bouton 11 de réglage est par exemple une molette permettant de régler un niveau d'intensité compris entre 10 et 100% d'une intensité nominale connue (dépendant par exemple de la programmation d'un ballast électronique (driver) de la source lumineuse). En Figure 2, une molette rotative est illustrée pour symboliser ce premier bouton 11 de réglage. La position 1 correspond à 10% de l'intensité nominale, la position 2 à 20%, etc.

D'autres solutions sont possibles, comme un clavier d'entrée associé à un écran d'affichage. Dans ce cas, la valeur réelle de Iₘᵢₙ peut être rentrée directement par l'opérateur, ou sélectionnée directement dans une liste affichée sur l'écran d'affichage.

Le module 5 de réglage comprend un deuxième bouton 12 de réglage manuel de l'intensité d'alimentation maximale Iₘₐₓ. Il peut être réalisé de la même façon que le premier bouton 11.

Si d'autres intensités d'alimentation sont à définir, le module 5 peut comprendre d'avantage de boutons de sélection.

Enfin, le module 5 de réglage comprend un troisième bouton 13 de sélection manuelle du programme P temporel. Le programme P temporel est par exemple désigné par une lettre (A, B, C, etc.) ou par un chiffre, chaque programme étant préenregistré dans le module 5, les paramètres dudit programme étant connus de l'utilisateur.

D'autres exemples de réalisation sont possibles dans lesquels les paramètres temporels du programme (notamment le début, la fin et/ou la durée des périodes temporelles pour Iₘᵢₙ et Iₘₐₓ) sont définis directement via l'interface 7 manuelle par l'opérateur, c'est-à-dire que l'opérateur ne sélectionne pas de programme préenregistré mais définit lui-même le programme et ses paramètres par l'intermédiaire de l'interface 7.

Le troisième bouton 13 peut notamment comprendre une position permettant de sélectionner le programme temporel P₀ pour lequel l'intensité d'alimentation est constamment égale à I₀, ladite intensité I₀ étant définie par exemple par le premier 11 bouton de réglage, le deuxième bouton 12 de réglage étant alors inactif. Par exemple, en Figure 2, il s'agit de la position « 0 » du bouton 13.

Un témoin lumineux 25 peut être présent sur le module 5 de réglage indiquant à l'opérateur que le module 5 est sous tension et fonctionne.

Dans un mode de réalisation, des programmes P temporels sont enregistrés dans une mémoire du module 5 de réglage. L'interface 7 manuelle permet de sélectionner un des programmes enregistrés.

Par exemple, chaque programme P temporel comprend une durée t1 et une durée t2, comme illustré en Figure 3. La somme des durées t1 et t2 permet de définir la durée totale de la période temporelle correspondant à l'intensité d'alimentation Iₘᵢₙ.

Comme illustré en Figure 3, les durées t1 et t2 s'étendent à partir d'un point temporel M de repère. Dans le cas où les périodes temporelles des durées t1 et t2 sont nocturnes, le point temporel M de repère correspond donc sensiblement au milieu d'une plage nocturne. Ce point temporel de repère est calculé par le module 5 de réglage. En effet, en général, le déclenchement de l'allumage du lampadaire 1 est piloté par une horloge astronomique ou par un capteur de luminosité placé dans une armoire de distribution.

Le module 5 de réglage se base sur son temps d'allumage pour déterminer le point temporel M de repère (point milieu de la plage nocturne).

Des périodes temporelles des programmes temporels peuvent notamment être définies par rapport à ce point temporel M de repère.

On note que si le temps d'allumage du module 5 n'est pas une période nocturne (par exemple dans le cas où le luminaire est allumé pendant des plages diurnes), le point temporel M de repère n'est pas le milieu de la plage nocturne, mais est par exemple le milieu de la période d'allumage du luminaire. Au moins un programme temporel peut être défini par rapport à ce point temporel de repère, selon les applications.

La Figure 3 illustre donc la période temporelle Pₘᵢₙ durant laquelle l'intensité d'alimentation reçue par la source 2 lumineuse est égale à l'intensité d'alimentation minimale Iₘᵢₙ, qui s'étend de M-t₁ à M+t₂, et la période temporelle Pₘₐₓ durant laquelle l'intensité d'alimentation reçue par la source 2 lumineuse est égale à l'intensité d'alimentation maximale Iₘₐₓ, correspondant à la période restante de la plage nocturne.

Des exemples de valeurs sont fournis dans le tableau ci-dessous en fonction du programme P temporel sélectionné via le troisième bouton 13:

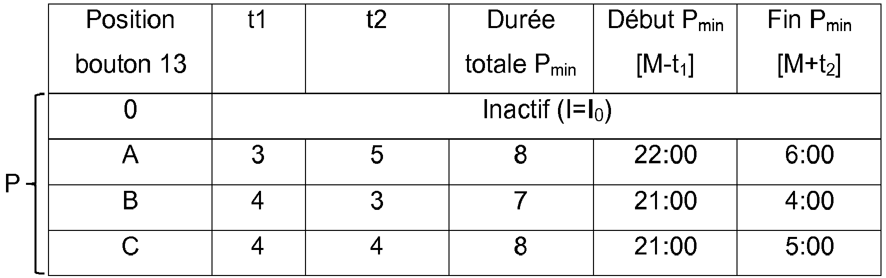

Comme indiqué précédemment, le module 5 de réglage peut permettre, dans un autre mode de réalisation, de régler directement le début et la fin des périodes temporelles de Iₘᵢₙ et Iₘₐₓ par simple lecture et réglage manuel (par exemple par entrée via un clavier et affichage par un écran).

Dans un mode de réalisation, le module 5 de réglage comprend en outre un dispositif 18 de protection contre la surtension, configuré pour protéger le lampadaire 1, et en particulier la source 2 lumineuse, d'une surtension. Ainsi, le module 5 de réglage permet d'offrir un module complet permettant le réglage personnalisé et manuel de l'intensité du lampadaire 1 associée à la protection dudit lampadaire 1.

Comme illustré en Figure 4, le dispositif 18 de protection est disposé entre les lignes 30 électriques provenant du réseau électrique, et la source 2 lumineuse.

Le dispositif 18 de protection permet de protéger le lampadaire contre les surtensions dites transitoires rapides (comme par exemple les coups de foudre indirects, dont la durée est typiquement de l'ordre de 10ms) et les surtensions dites prolongées (comme par exemple les surtensions dues à la rupture de la continuité de neutre, ou à un défaut d'isolement, dont la durée est typiquement supérieure à 10s).

Le module 5 de réglage peut notamment comprendre un témoin 19 lumineux indiquant lorsque le dispositif 18 de protection est actuellement actif contre une surtension. Ce témoin 19 lumineux peut par exemple être allumé lorsque qu'aucune surtension n'a été subie, et s'éteindre en cas de surtension.

Le dispositif 18 de protection contre la surtension peut notamment être disposé entre une ligne électrique de phase 22 et une ligne électrique de neutre 23 provenant du réseau électrique et alimentant la source 2 lumineuse. Le dispositif 18 de protection n'est en général pas lié à la terre.

Un exemple de réalisation du dispositif 18 de protection est illustré en Figure 5.

Le dispositif 18 comprend une varistance 33 disposée entre une ligne électrique de phase 22 et une ligne électrique de neutre 23 provenant d'un réseau électrique et alimentant la source 2 lumineuse.

Lorsque la tension entre la ligne électrique de phase 22 et la ligne électrique de neutre 23 est normale (environ 230V), la varistance 33 fonctionne en circuit ouvert.

Lorsque la tension entre la ligne électrique de phase 22 et la ligne électrique de neutre 23 dépasse une valeur seuil (typiquement 280V), la varistance 33 fonctionne en circuit fermé, ce qui permet de détourner les impulsions électriques de la source 2 lumineuse afin de la protéger.

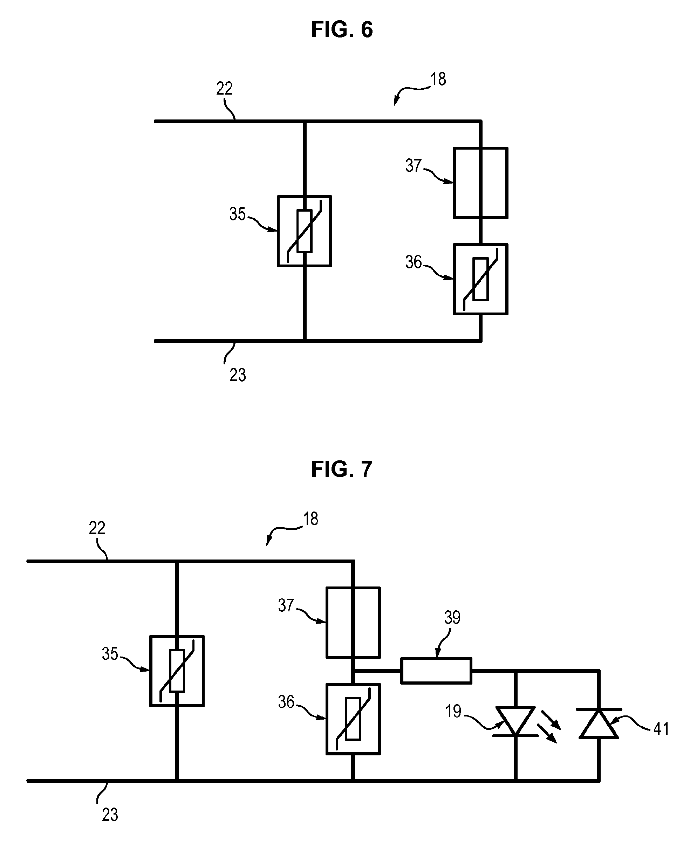

Un autre exemple de réalisation du dispositif 18 de protection est illustré en Figures 6 et 7.

Le dispositif 18 comprend une première varistance 35, et une deuxième varistance 36, connectées en parallèle.

La première varistance 35 est disposée entre une ligne électrique de phase 22 et une ligne électrique de neutre 23 provenant d'un réseau électrique et alimentant la source 2 lumineuse.

Un fusible 37 est connecté en série avec la deuxième varistance 36.

Un témoin lumineux 19, par exemple de type LED, est branché aux extrémités de la deuxième varistance 36. Si nécessaire, le dispositif 18 comprend en outre une résistance 39 connectée en série avec le témoin lumineux 19, et une diode 41 connectée en parallèle avec le témoin lumineux 19.

La deuxième varistance 36 est dimensionnée pour qu'en cas de surtension, elle soit la première à devenir conductrice. Ceci a pour conséquence, lors d'une surtension, de faire fondre le fusible 37. La fonte du fusible 37 provoque l'extinction définitive du témoin lumineux 19. Ceci indique donc que le lampadaire 1 a subit une surtension.

La première varistance 35 est sollicitée en cas de surtension prolongée. Dans ce cas, la première varistance 35 devient conductrice, ce qui entraîne la fonte d'un fusible (non représenté) disposé en amont du module 5 de réglage, afin de déconnecter le lampadaire 1 du réseau électrique, et ainsi le protéger.

Comme on le comprend, d'autres modes de réalisation sont possibles pour le dispositif 18, selon les besoins.

Le dispositif 18 de protection contre la surtension peut en outre être coulé dans une résine de protection. En effet, le dispositif 18 convertit la surtension en surintensité ce qui provoque par effet Joule un échauffement. En cas de surtension prolongée, cet échauffement peut conduire à l'explosion du dispositif 18 avec dégagement de flammes. La résine de protection permet de confiner l'énergie dans le module.

L'invention offre de nombreux avantages et permet de piloter un lampadaire en pied de mât de manière simple et personnalisée. En particulier, l'invention permet de régler les plages d'abaissement, en particulier nocturnes, par simple réglage manuel et visuel par un opérateur, sans nécessiter l'utilisation d'une unité de pilotage externe et la connexion de ladite unité au luminaire.

Grâce à l'interface simple et manuelle du module, un opérateur non spécialisé peut lui-même piloter le lampadaire via ladite interface de réglage du module, directement sur le lampadaire et à portée d'homme.

De plus, étant donné que le module 5 communique par signal numérique avec la source 2 lumineuse et son alimentation 16, celui-ci s'adapte donc à tout type de source lumineuse et de lampadaire. Il n'est pas nécessaire de modifier la source lumineuse ou son alimentation pour pouvoir mettre en oeuvre le pilotage.

On note également que le module 5 est peu encombrant (mêmes dimensions environ qu'un porte-fusible). Ses dimensions lui permettent de s'intégrer dans les plus petits coffrets disposés en pied de mât des lampadaires.

Par exemple, le module peut présenter une hauteur de 80 mm, une largeur de 40 mm et une profondeur de 20 mm.

Enfin, le module 5 de réglage peut notamment assurer à la fois le réglage manuel de l'intensité lumineuse ainsi que la protection du lampadaire contre les surtensions, dans un boîtier unique.

## Revendications

1. Module (5) de réglage de l'intensité lumineuse d'une source (2) lumineuse d'un lampadaire (1), ledit module (5) comprenant une interface (7) de réglage manuel, l'interface (7) de réglage manuel permettant le réglage manuel par un opérateur :
d'au moins une intensité d'alimentation maximale (Iₘₐₓ), ou d'une grandeur corrélée,
d'au moins une intensité d'alimentation minimale (Iₘᵢₙ), ou d'une grandeur corrélée, et
d'au moins un programme (P) temporel comprenant au moins une période temporelle durant laquelle la source (2) lumineuse reçoit l'intensité d'alimentation minimale (Iₘᵢₙ), et au moins une autre période temporelle durant laquelle la source (2) lumineuse reçoit l'intensité d'alimentation maximale (Iₘₐₓ),
le module (5) de réglage étant configuré pour contrôler la source (2) lumineuse pour que celle-ci reçoive une intensité d'alimentation conforme au programme (P) temporel sélectionné.

2. Module (5) de réglage selon la revendication 1, dans lequel l'interface (7) manuelle permet en outre la sélection d'une intensité d'alimentation (I₀), ou d'une grandeur corrélée, et d'un programme (P₀) temporel pour lequel la source (2) lumineuse reçoit constamment ladite intensité d'alimentation(I₀).

3. Module (5) de réglage selon l'une des revendications 1 ou 2, dans lequel le module (5) de réglage comprend :
- un premier bouton (11) de réglage manuel de l'intensité d'alimentation minimale (Iₘᵢₙ),
- un deuxième bouton (12) de réglage manuel de l'intensité d'alimentation maximale (Iₘₐₓ), et
- un troisième bouton (13) de sélection manuelle du programme (P) temporel.

4. Module (5) de réglage selon l'une des revendications 1 à 3, configuré pour détecter un point (M) temporel de référence à partir de son temps d'allumage, au moins un programme (P) temporel étant défini par rapport à ce point (M) temporel de référence.

5. Module (5) de réglage selon l'une des revendications 1 à 4, dans lequel la source (2) lumineuse comprend une alimentation (16) gérant son alimentation électrique, le module (5) de réglage communiquant avec l'alimentation (16) par un signal numérique de sorte à la contrôler conformément à la sélection opérée sur l'interface (7) de réglage manuel.

6. Module (5) de réglage selon l'une des revendications 1 à 5, comprenant en outre un dispositif (18) de protection contre la surtension, configuré pour protéger la source (2) lumineuse d'une surtension.

7. Module (5) de réglage selon la revendication 6, dans lequel le module (5) de réglage comprend un témoin (19) lumineux indiquant lorsque le dispositif (18) de protection est actuellement actif contre une surtension.

8. Module (5) de réglage selon l'une des revendications 6 ou 7, dans lequel le dispositif (18) de protection contre la surtension est disposé entre une ligne électrique de phase (22) et une ligne électrique de neutre (23) provenant d'un réseau électrique et alimentant la source (2) lumineuse.

9. Module (5) de réglage selon l'une des revendications 6 à 8, dans lequel le dispositif (18) de protection contre la surtension est coulé dans une résine de protection.

10. Lampadaire (1) comprenant :
- une source (2) lumineuse,
- un mât (15) supportant la source (2) lumineuse,
caractérisé en qu'il comprend en outre un module (5) de réglage de l'intensité lumineuse de la source (2) lumineuse, conforme à l'une des revendications 1 à 9, et disposé dans le mât (15).
